# FASCICULE DE BREVET EUROPEEN

(11) **EP 1 193 969 B1**
(45) Date de publication et mention de la délivrance du brevet: **20.04.2011**
(21) Numéro de dépôt: 01203622.4
(22) Date de dépôt: 25.09.2001
(51) Int. Cl.: H04N 5/445

(54) **Dispositif et procédé pour recevoir un programme parmi une multitude**
Vorrichtung und Verfahren zum Empfangen eines Programms aus einer Vielzahl
Apparatus and method for receiving one of a plurality of programs

(30) Priorité: 29.09.2000 FR 0012457
(43) Date de publication de la demande: 03.04.2002
(73) Titulaire: Koninklijke Philips Electronics N.V., 5621 BA Eindhoven (NL)
(72) Inventeur: Gentric, Philippe, c/o Société Civile S.P.I.D., 75008 Paris (FR)
(74) Mandataire: Roche, Denis

(56) Documents cités:
- WO-A-99/40506
- DE-A- 19 638 555
- US-A- 6 005 597

## Description

L'invention concerne un récepteur d'informations provenant d'une multitude de programmes.

L'invention concerne aussi un procédé pour recevoir un programme parmi une multitude.

L'invention trouve des applications importantes lorsque, notamment les programmes sont des programmes de télévision et/ou de radio fournis au moyen du réseau internet ou d'un réseau de ce genre.

Il est connu du document de brevet PCT WO 99/40506, un procédé pour naviguer parmi cette multitude de programmes. Cependant ce procédé ne donne aucune solution pour gérer la réception d'un grand nombre de programmes nécessitant un processus de réception plutôt complexe.

Il en est de même pour le document US-A 6,005,597, plus adapté à incruster une image d'un programme dans une autre image d'un autre programme.
On connait du document DE 196 38 555 un système qui permet de choisir un programme parmi une pluralité préétablie.

L'invention propose un récepteur tel que défini dans la revendication 1

Un tel récepteur est remarquable en ce qu'il comporte, en plus, une pluralité d'autres dispositifs de réception de programmes pour recevoir des programmes selon un critère préétabli.

La description suivante, faite en regard des dessins ci-annexés, le tout donné à titre d'exemples non limitatifs fera bien comprendre comment l'invention peut être réalisée.

Sur les dessins :
La figure 1 montre un système de transmission dans lequel l'invention est mise à profit,
La figure 2 montre un récepteur conforme à l'invention,
La figure 3 montre une première disposition des références des programmes,
La figure 4 montre une deuxième disposition des références des programmes.

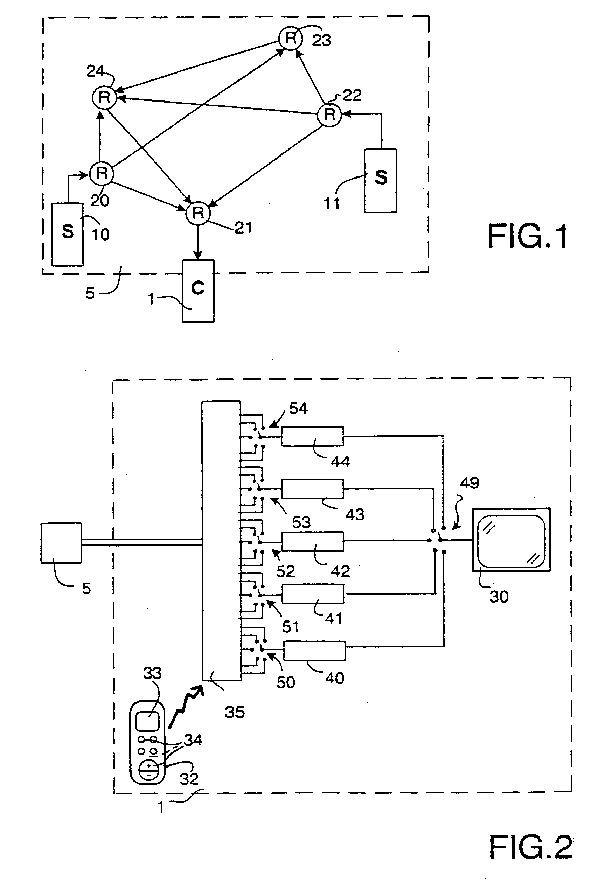

A la figure 1, on a représenté un récepteur 1 conforme à l'invention, relié au réseau internet 5. Ce réseau comporte des serveurs d'informations multimédia dont deux sont représentés à la figure 1. Ce sont les serveurs portant les références 10 et 11. Le récepteur 1 et les serveurs 10 et 11 sont reliés entre eux par l'intermédiaire de noeuds 20 à 24.

Pour restituer ces informations qui se présentent sous forme numérique, on effectue différentes opérations qui nécessitent du temps de traitement. Ce temps devient insupportable pour un utilisateur qui change souvent de programmes.

Par exemple, si on se place dans le cas où les informations sont des émissions de télévision transmises au moyen de la norme MPEG-4, on est déjà soumis au délai d'attente des points RAP (Random Access Points) qui surgissent dans le flux des informations transmises. Ces points correspondent à des images de référence et c'est à partir de celles-ci que I' on effectue des mises à jour diverses afin de rétablir la continuité des séquences d'images. Ces points surviennent dans des laps de temps dont l'ordre de grandeur est de quelques secondes. Ceci amène l'inconvénient que lorsque l'on change de programme, il faut attendre au moins ces quelques secondes ce qui est très désagréable pour l'utilisateur.

Les récepteurs utilisent la technique du pipe-line pour effectuer leur traitement. Cela impose que plusieurs trames de signaux soient reçues avant que l'utilisateur perçoive le programme.

Les mémoires tampons qu'utilisent ces traitements retardent encore l'apparition de ces programmes.

Plus grave encore est le retard dû à la distribution de programme par un réseau du genre internet : l'utilisateur doit faire sa requête ; un chemin se crée parmi les différents noeuds pour chaque paquet d'informations transmis par les serveurs ; il en découle des fluctuations dont le récepteur doit s'affranchir en ajoutant un retard qui nivèle ces fluctuations.

Le récepteur 5 montré schématiquement à la figure 2 permet de résoudre, dans une grande mesure, la sensation de retard au changement des programmes. Ce récepteur comporte un organe de restitution 30 incorporant un écran de visualisation et autres dispositifs multimédia, sons notamment. Il comporte aussi un organe d'indication constitué, ici, par un boîtier de télécommande 32 muni d'un écran 33 et d'un clavier 34 qui permet de changer le programme pour l'organe de restitution 30. Ce clavier 34 comporte notamment des touches « + » et « - » afin de pouvoir changer d'une manière continue le numéro des programmes. Un circuit d'interface 35 assure la jonction avec le réseau internet 5.

Conformément à l'invention, ce récepteur comporte une pluralité de dispositifs de réceptions 40, 41, 42, 43 et 44 fonctionnant en parallèle. L'organe de restitution se connecte à la sortie d'un seul de ces dispositifs de réception. Cela est figuré par un commutateur 49. Tous ces dispositifs peuvent recevoir tous les programmes du réseau internet ; ceci est figuré par des commutateurs 50 à 54 branchés aux entrées des dispositifs 40 à 44, respectivement.

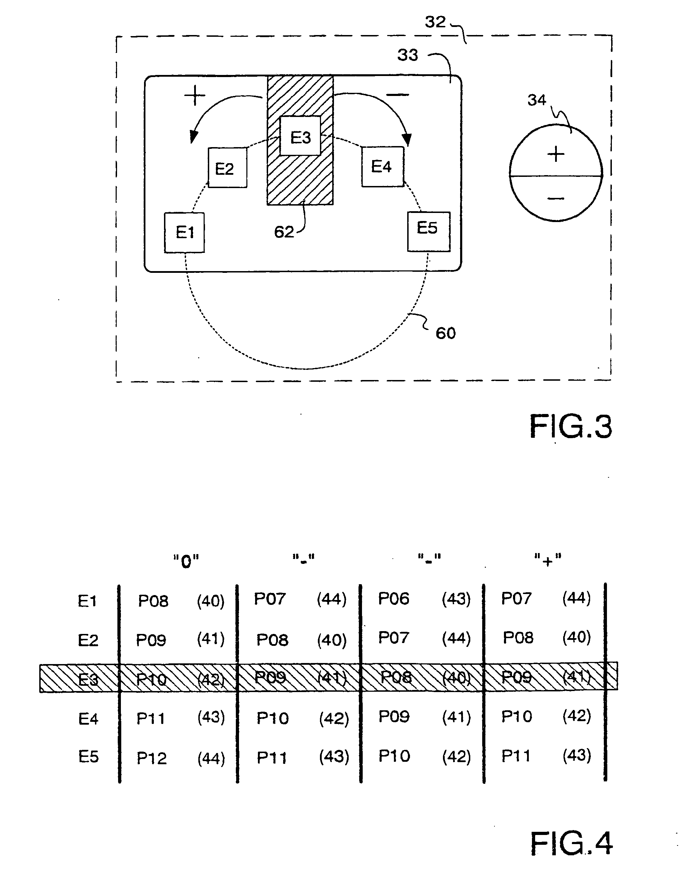

La figure 3 montre comment sont disposés les intitulés des programmes, ou leurs références, sur l'écran 33 du boîtier de télécommande 32. D'une manière préférentielle, les références des programmes sont portées dans des emplacements E1 à E5 dont le nombre correspond au nombre de dispositifs de réception. Ces emplacements sont disposés selon un cercle 60 dont, seul, un arc est visible sur l'écran 33. Lorsqu'on manoeuvre les touches « + » et « - » du clavier 34, on a l'impression d'une rotation des références des programmes à restituer. Ces références sont définies selon un certain critère, par exemple tous les programmes provenant de certains sites. Une zone centrale 62 représentée avec des hachures détermine le programme sélectionné. On a constitué en quelque sorte un carrousel.

La figure 4 montre comment les références de programmes d'une liste d'une centaine de programmes ou plus sont affichées et quels sont les dispositifs de réception qui sont impliqués lorsqu'on appuie sur les touches « + » et « - ».

Sur cette figure, on a porté différentes colonnes, la colonne « 0 » représente l'état initial considéré de la télécommande. Aux emplacements E1 à E5 les références P08 à P12 de programmes sont respectivement affichées. Ces programmes sont traités respectivement par les dispositifs de réception 40 à 44. Les références de ces dispositifs sont mises entre parenthèses sur cette figure. Lorsqu'on appuie une première fois sur la touche « - », à l'emplacement E3 se trouve la référence de programme P09 . Le programme P12 n'est plus visible et le dispositif de réception 44 qui lui a été affecté est rendu disponible, de sorte qu'il est mis en condition, dès ce premier appui de la touche « - », pour traiter les informations du programme référencé P07. Au deuxième appui de cette touche « - », il y a donc encore une rotation des références des programmes affichés ; cette fois-ci c'est le programme dont la référence est P08 qui est sélectionné tandis que le dispositif de réception 43 est libéré pour traiter le programme dont la référence est P06. Si on appuie sur la touche « + », on se retrouve alors dans le même cas que celui rencontré lors du premier appui de la touche « - ».

Ainsi la liste affichée des programmes évolue en fonction du choix de l'utilisateur.

Ainsi on se rend compte que l'utilisateur doit appuyer au moins deux fois pour sélectionner un programme qui n'était pas encore traité par un desdits dispositifs de réception. En admettant que l'utilisateur regarde quelques temps le programme à chaque appui d'une touche, ces temps peuvent suffire à établir la restitution du nouveau programme qui rentre dans le carrousel.

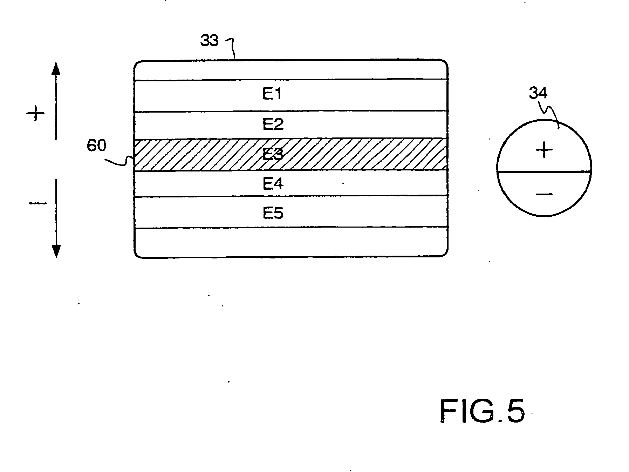

A la disposition en carrousel, qui est estimée agréable, on peut préférer une disposition en défilement comme représenté à la figure 5. Les différents emplacements E1 à E5 sont placés sur différentes lignes de l'écran 33. En jouant sur les touches « + » et « - » les références des programmes se déplacent verticalement. La ligne centrale, hachurée, représente le programme sélectionné.

Il est aussi possible de faire varier la zone de sélection hachurée, mais lorsqu'elle arrive en butée, l'utilisateur n'a plus d'information sur les programmes situés hors de la butée.

Ainsi, les programmes sont accessibles d'une manière séquentielle pour libérer et charger un des dispositifs de réception.

Les programmes traités par les différents dispositifs de réception peuvent correspondre aux programmes favoris de l'utilisateur ; cela peut constituer un autre critère.

## Revendications

1. Récepteur (1) d'informations provenant d'une multitude de programmes, ledit récepteur comportant une pluralité de dispositifs de réception de programmes (40, 41, 42, 43, 44) pour recevoir des programmes selon un critère préétabli,
**caractérisé en ce que**
les programmes reçus par la pluralité de dispositifs de réception sont accessibles de manière séquentielle selon une liste de programmes affichés, et
l'accès, à partir d'un programme courant, à un programme adjacent dans la liste, provoque
a) une rotation des programmes affichés sur la liste de sorte qu'un premier programme (P12) n'est plus visible et le dispositif de réception qui lui est associé (44) est libéré puis
b) un chargement d'un second programme (P07) qui est traité par le dispositif de réception ainsi libéré.

2. Récepteur selon la revendication 1, **caractérisé en ce qu'**il comporte un organe d'indication de programme qui montre une liste des programmes correspondant audit critère préétabli.

3. Récepteur selon la revendication 1 ou 2, **caractérisé en ce que** le critère préétabli correspond à un certain nombre de programmes supérieur au nombre de dispositifs de réception et **en ce qu'**il comporte un organe d'indication de programmes qui montre la liste d'une partie des programmes évoluant en fonction du choix de l'utilisateur.

4. Récepteur selon l'une des revendications 1 à 3, **caractérisé en ce que** les programmes proviennent du réseau internet.

5. Procédé pour recevoir des informations provenant d'une multitude de programmes mis en oeuvre dans un récepteur selon l'une des revendications 1 à 4, **caractérisé en ce qu'**il comporte les étapes suivantes :
- établissement d'une liste de programmes susceptibles d'être reçus par une pluralité de dispositifs de réception de programmes (40, 41, 42, 43, 44),
- mise en réception simultanée d'une pluralité de programmes de ladite liste,
- sélection d'un des programmes parmi ladite pluralité ;
**caractérisé en ce que** le procédé comporte une étape d'accès aux programmes reçus par la pluralité de dispositifs de réception de manière séquentielle selon la liste de programmes affichés, telle que l'accès, à partir d'un programme courant, à un programme adjacent dans la liste, provoque
a) une rotation des programmes affichés sur la liste de sorte qu'un premier programme (P12) n'est plus visible et le dispositif de réception qui lui est associé (44) est libéré puis
b) un chargement d'un second programme (P07) qui est traité par le dispositif de réception ainsi libéré.

## Claims

1. A receiver (1) of data coming from a multitude of programs, said receiver comprising a plurality of program receiving devices (40, 41, 42, 43, 44) for receiving programs in accordance with a pre-established criterion,
**characterized in that**
the programs received by the plurality of receiving devices are accessible in a sequential manner according to a list of displayed programs, and
the access, based on a current program, to an adjacent program in the list, causes
a) a rotation of displayed programs on the list, so that a first program (P12) is no longer visible and the receiving device that is associated thereto (44) is free, after this
b) a loading of a second program (P07) that is processed by the thus freed receiving device.

2. A receiver as claimed in claim 1, **characterized in that** it comprises a program indication element that shows a list of programs corresponding to said pre-established criterion.

3. A receiver as claimed in claim 1 or 2, **characterized in that** the pre-established criterion corresponds to a certain number of programs that exceeds the number of receiving devices and **in that** it comprises a program indication element that shows the list of part of the programs evolving from the choice of the user.

4. A receiver as claimed in any one of the claims 1 to 3, **characterized in that** the programs come from the internet.

5. A method for receiving data coming from a multitude of programs employed in a receiver as claimed in any one of the claims 1 to 4, **characterized in that** it comprises the following steps:
- establishing a list of programs that are likely to be received by a plurality of program receiving devices (40, 41, 42, 43, 44);
- putting a plurality of programs of said list simultaneously in the receiving mode;
- selecting one of the programs from said plurality;
**characterized in that** the method comprises a step of accessing the programs received by the plurality of receiving devices in a sequential manner in accordance with the list of displayed programs, so that the access, based on a current program, to an adjacent program in the list, causes
a) a rotation of displayed programs on the list, so that a first program (P12) is no longer visible and the receiving device that is associated thereto (44) is free, after this
b) a loading of a second program (P07) that is processed by the thus freed receiving device.

## Patentansprüche

1. Empfänger (1) von Informationen, die aus einer Vielzahl von Programmen stammen, wobei der genannte Empfänger eine Vielzahl von Programmempfangseinrichtungen (40, 41, 42, 43, 44) zum Empfangen von Programmen gemäß einem vorbestimmten Kriterium umfasst,
**dadurch gekennzeichnet, dass**
auf die von der Vielzahl von Empfangseinrichtungen empfangenen Programme sequentiell gemäß einer Liste mit angezeigten Programmen zugegriffen werden kann und
der Zugriff ausgehend von einem laufenden Programm auf ein in der Liste benachbartes Programm Folgendes bewirkt:
a) Rotieren der in der Liste angezeigten Programme, so dass ein erstes Programm (P12) nicht mehr sichtbar ist und die ihm zugeordnete Empfangseinrichtung (44) freigegeben wird, und dann
b) Laden eines zweiten Programms (P07), das von der somit freigegebenen Empfangseinrichtung verarbeitet wird.

2. Empfänger nach Anspruch 1, **dadurch gekennzeichnet, dass** er eine Programmanzeigeeinheit umfasst, die eine Liste derjenigen Programme zeigt, die dem genannten vorbestimmten Kriterium entsprechen.

3. Empfänger nach Anspruch 1 oder 2, **dadurch gekennzeichnet, dass** das vorbestimmte Kriterium einer gewissen Anzahl von Programmen entspricht, die höher als die Anzahl der Empfangseinrichtungen ist, und dass er eine Programmanzeigeeinheit umfasst, die die Liste eines Teils der Programme zeigt, die sich in Abhängigkeit von der Auswahl des Benutzers entwickelt.

4. Empfänger nach einem der Ansprüche 1 bis 3, **dadurch gekennzeichnet, dass** die Programme aus dem Internet stammen.

5. Verfahren zum Empfangen von Informationen, die aus einer Vielzahl von Programmen stammen, das in einem Empfänger nach einem der Ansprüche 1 bis 4 ausgeführt wird, **dadurch gekennzeichnet, dass** es die folgenden Schritte umfasst:
- Erstellen einer Liste von Programmen, die von einer Vielzahl von Programmempfangseinrichtungen (40, 41, 42, 43, 44) empfangen werden können,
- Bereitmachen zum gleichzeitigen Empfang einer Vielzahl von Programmen der genannten Liste,
- Auswählen eines der Programme aus der genannten Vielzahl,
**dadurch gekennzeichnet, dass** das Verfahren einen Schritt des Zugriffs auf die von der Vielzahl von Empfangseinrichtungen gemäß der Liste der angezeigten Programme sequentiell empfangenen Programme umfasst, so dass der Zugriff ausgehend von einem laufenden Programm auf ein in der Liste benachbartes Programm Folgendes bewirkt:
a) Rotieren der in der Liste angezeigten Programme, so dass ein erstes Programm (P12) nicht mehr sichtbar ist und die ihm zugeordnete Empfangseinrichtung (44) freigegeben wird, und dann
b) Laden eines zweiten Programms (P07), das von der somit freigegebenen Empfangseinrichtung verarbeitet wird.
